# FASCICULE DE BREVET EUROPEEN

(11) **EP 4 146 912 B1**
(45) Date de publication et mention de la délivrance du brevet: **01.01.2025**
(21) Numéro de dépôt: 21731219.8
(22) Date de dépôt: 23.04.2021
(51) Int. Cl.: F01D 5/02, F02C 7/36, F02C 7/06

(54) **AGENCEMENT POUR TURBOMACHINE D'AERONEF À LUBRIFICATION AMELIORÉE, L'AGENCEMENT COMPRENANT UN ARBRE COUPLÉ EN ROTATION À UN ÉLÉMENT SUIVEUR, PAR DES CANNELURES**
ANORDNUNG FÜR EIN FLUGZEUGTURBINENTRIEBWERK MIT VERBESSERTER SCHMIERUNG MIT EINER WELLE, DIE ÜBER KEILE DREHBAR MIT EINEM FOLGEELEMENT GEKOPPELT IST
ARRANGEMENT FOR AN AIRCRAFT TURBINE ENGINE HAVING IMPROVED LUBRICATION, THE ARRANGEMENT COMPRISING A SHAFT ROTATABLY COUPLED TO A FOLLOWING MEMBER BY MEANS OF SPLINES

(30) Priorité: 04.05.2020 FR 2004373
(43) Date de publication de la demande: 15.03.2023
(73) Titulaire: SAFRAN AIRCRAFT ENGINES, 75015 Paris (FR); Safran Transmission Systems, 92700 Colombes (FR)
(72) Inventeur: FOGLIA, Matthieu, Bruno, François, 77550 MOISSY-CRAMAYEL (FR); MORREALE, Serge, René, 77550 MOISSY-CRAMAYEL (FR); SIMON, Adrien, Louis, 77550 MOISSY-CRAMAYEL (FR)
(74) Mandataire: Brevalex
(86) Numéro de dépôt international: PCT/FR2021/050703
(87) Numéro de publication internationale: WO 2021/224557

(56) Documents cités:
- EP-A1- 3 557 031
- FR-A1- 3 086 343
- US-A1- 2016 003 090
- US-A1- 2019 292 942

## Description

### DOMAINE TECHNIQUE

La présente invention se rapporte au domaine des turbomachines d'aéronef. Elle concerne plus particulièrement un agencement destiné à être mis en oeuvre dans de telles turbomachines, cet agencement comprenant un arbre rotatif couplé en rotation à un élément suiveur, via une liaison à cannelures.

L'invention concerne en particulier la gestion de la lubrification des éléments constitutifs d'un tel agencement.

L'invention s'applique préférentiellement à des turbomachines comprenant une soufflante entraînée par un réducteur, tel que cela est par exemple connu du document FR 2 987 402 A1 et du document FR 3 086 343 A1.

### ETAT DE LA TECHNIQUE ANTERIEURE

Dans les turbomachines d'aéronef, il est prévu des agencements dans lesquels un arbre rotatif est couplé en rotation avec un élément suiveur, via une liaison à cannelures. Il s'agit par exemple d'un arbre moteur, couplé en rotation avec une roue dentée d'un réducteur de vitesse entraînant une soufflante de la turbomachine. Selon un autre exemple, cette roue dentée peut être une roue de prélèvement de puissance mécanique sur l'arbre moteur avec lequel elle est couplée en rotation.

Généralement, ce type d'agencement est lubrifié en étant plongé dans un bain d'huile très peu renouvelée. Cependant, cette technique conventionnelle de lubrification peut s'avérer insuffisante en cas d'accroissement de l'intensité des couples à transmettre au sein de tels agencements. En effet, un tel accroissement génère des pressions de contact plus élevées entre les cannelures, avec un besoin d'évacuer l'énergie dissipée au niveau de ces contacts.

Ce problème de lubrification s'ajoute à celui des déplacements relatifs axiaux entre l'arbre moteur et l'élément suiveur. De tels déplacements peuvent être provoqués par des effets de dilatation thermique différentielle entre les éléments constitutifs de l'agencement, surtout lorsque l'arbre moteur présente une grande longueur axiale.

### EXPOSÉ DE L'INVENTION

Pour répondre au moins partiellement aux inconvénients mentionnés ci-dessus, l'invention a tout d'abord pour objet un agencement pour turbomachine d'aéronef comprenant un arbre rotatif selon un axe de rotation, ainsi qu'un élément suiveur centré sur l'axe de rotation et couplé en rotation avec l'arbre par une liaison à cannelures comprenant des premières cannelures solidaires de l'élément suiveur, ainsi que des secondes cannelures solidaires de l'arbre rotatif et coopérant avec lesdites premières cannelures. Selon l'invention, l'agencement comporte de plus :
- de part et d'autre de la liaison à cannelures, respectivement une liaison amont de centrage radial de l'élément suiveur relativement à l'arbre, et une liaison aval de centrage radial de l'élément suiveur relativement à l'arbre, les liaisons amont et aval de centrage radial étant glissantes axialement ;
- des moyens de projection d'un lubrifiant dans une cavité de collecte de lubrifiant ;
- au moins un passage d'admission de lubrifiant réalisé à travers l'arbre rotatif ou l'élément suiveur, le passage d'admission de lubrifiant débouchant d'une part dans ladite cavité de collecte de lubrifiant, et d'autre part dans une cavité de lubrification des cannelures délimitée en partie par les liaisons amont et aval de centrage radial ; et
- au moins un passage d'évacuation de lubrifiant réalisé à travers l'arbre rotatif ou l'élément suiveur, le passage d'évacuation de lubrifiant débouchant d'une part dans ladite cavité de lubrification des cannelures, et d'autre part extérieurement à l'agencement.

Grâce aux deux liaisons de centrage radial, chacune à caractère glissant selon la direction axiale, l'agencement selon l'invention permet de faire face aux déplacements relatifs axiaux entre l'arbre rotatif et l'élément suiveur, par exemple suite à une dilatation thermique différentielle.

De plus, le centrage radial n'étant plus effectué par les cannelures, des jeux radiaux importants peuvent être ménagés en bout de ces cannelures, favorisant le passage d'un flux de lubrifiant capable d'évacuer la partie de la puissance dissipée au niveau des contacts entre ces cannelures.

En outre, la conception proposée pour l'agencement selon l'invention permet non seulement une lubrification satisfaisante des cannelures, mais également une lubrification performante des deux liaisons de centrage radial.

L'invention présente par ailleurs au moins l'une des caractéristiques optionnelles suivantes, prises isolément ou en combinaison.

De préférence :
- la liaison amont de centrage radial est réalisée par une première portion de centrage amont prévue sur l'élément suiveur, ainsi que par une seconde portion de centrage amont prévue sur l'arbre et coopérant avec la première portion de centrage amont de manière à définir un jeu radial amont au sein de la liaison amont de centrage radial ;
- la liaison aval de centrage radial est réalisée par une première portion de centrage aval prévue sur l'élément suiveur, ainsi que par une seconde portion de centrage aval prévue sur l'arbre et coopérant avec la première portion de centrage aval de manière à définir un jeu radial aval au sein de la liaison aval de centrage radial ; et
- chacun des jeux radiaux amont et aval est strictement inférieur aux jeux radiaux en bout de chacune des premières et secondes cannelures.

De préférence, le/les passages d'admission de lubrifiant sont réalisés à travers la première portion de centrage amont prévue sur l'élément suiveur, et/ou le/les passages d'évacuation de lubrifiant sont réalisés à travers la seconde portion de centrage aval prévue sur l'arbre rotatif. Néanmoins, toute autre solution reste possible, sans sortir du cadre de l'invention.

De préférence, la cavité de collecte de lubrifiant est annulaire et centrée sur l'axe de rotation, ladite cavité de collecte étant ouverte radialement vers l'intérieur, et fermée radialement vers l'extérieur.

De préférence, la cavité de collecte de lubrifiant est réalisée au sein de l'élément suiveur. Alternativement, cette cavité pourrait être réalisée dans une pièce rapportée sur l'élément suiveur.

De préférence, l'élément suiveur est agencé autour de l'arbre rotatif.

De préférence, l'élément suiveur est une roue dentée.

L'invention a également pour objet une turbomachine d'aéronef comprenant un tel agencement.

De préférence, la turbomachine comporte une soufflante entraînée par un réducteur équipé d'au moins une roue dentée formant l'élément suiveur de l'agencement.

Enfin, l'invention a pour objet un procédé de lubrification d'un tel agencement, mis en oeuvre en projetant du lubrifiant dans la cavité de collecte de lubrifiant, de sorte que :
- le lubrifiant traverse ledit au moins un passage d'admission de lubrifiant pour pénétrer dans la cavité de lubrification des cannelures, à partir de laquelle le lubrifiant se sépare en un flux principal de lubrification des premières et secondes cannelures, et en un premier flux de lubrification de liaison, traversant la liaison amont de l'intérieur vers l'extérieur de la cavité de lubrification des cannelures ;
- puis de sorte qu'après son passage à travers les cannelures, le flux principal de lubrification des premières et secondes cannelures se sépare en un flux de fuite à travers ledit au moins un passage d'évacuation de lubrifiant, et en un second flux de lubrification de liaison, traversant la liaison aval de l'intérieur vers l'extérieur de la cavité de lubrification des cannelures.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels :
[Fig. 1] représente une vue schématique de côté d'un turboréacteur selon l'invention ;
[Fig. 2] représente une vue schématique de côté d'une partie du turboréacteur montré sur la figure précédente ;
[Fig. 3] représente une vue partielle en coupe d'un agencement selon un mode de réalisation préféré de l'invention, mis en oeuvre au sein du turboréacteur montré sur les figures 1 et 2 ; et
[Fig. 4] représente une vue partielle en coupe prise le long de la ligne IV-IV de la figure 3.

### EXPOSÉ DÉTAILLÉ DE MODES DE RÉALISATION PRÉFÉRÉS

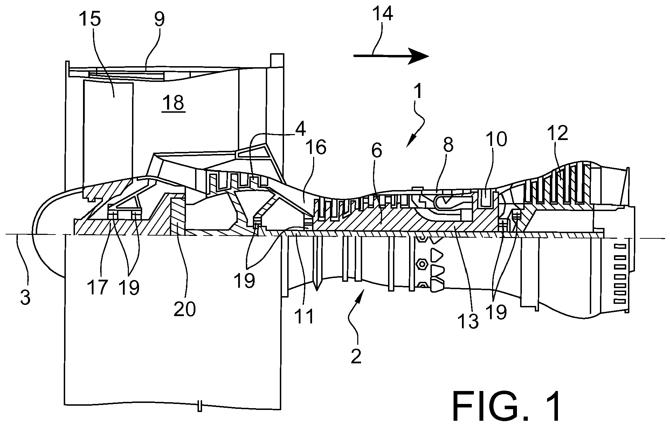

En référence à la figure 1, il est représenté un turboréacteur 1 à double flux et à double corps. Le turboréacteur 1 comporte de façon classique un générateur de gaz 2, de part et d'autre duquel sont agencés un compresseur basse pression 4, et une turbine basse pression 12. Le générateur de gaz 2 comprend un compresseur haute pression 6, une chambre de combustion 8 et une turbine haute pression 10. Par la suite, les termes « amont » et « aval » sont considérés selon une direction d'écoulement principale des gaz à travers le turboréacteur, cette direction étant schématisée par la flèche 14.

Le compresseur basse pression 4 et la turbine basse pression 12 forment un corps basse pression, et sont reliés l'un à l'autre par un arbre basse pression 11 centré sur un axe central longitudinal 3 du turboréacteur. De même, le compresseur haute pression 6 et la turbine haute pression 10 forment un corps haute pression, et sont reliés l'un à l'autre par un arbre haute pression 13 centré sur l'axe 3 et agencé autour de l'arbre basse pression 11. Les arbres sont supportés par des paliers de roulement 19, qui sont lubrifiés en étant agencés dans des enceintes d'huile. Il en est de même pour le moyeu de soufflante 17, également supporté par des paliers de roulement 19.

Le turboréacteur 1 comporte par ailleurs, à l'avant du générateur de gaz 2 et du compresseur basse pression 4, une soufflante 15 qui est ici agencée directement à l'arrière d'un cône d'entrée d'air du moteur. La soufflante 15 est rotative selon l'axe 3, et entourée d'un carter de soufflante 9. Cette soufflante 15 n'est pas entraînée directement par l'arbre basse pression 11, mais entraînée indirectement par ce même arbre via un réducteur 20, ce qui lui permet de tourner avec une vitesse plus lente.

En outre, de manière classique, le turboréacteur 1 définit une veine primaire 16 destinée à être traversée par un flux primaire, ainsi qu'une veine secondaire 18 destinée à être traversée par un flux secondaire situé radialement vers l'extérieur par rapport au flux primaire.

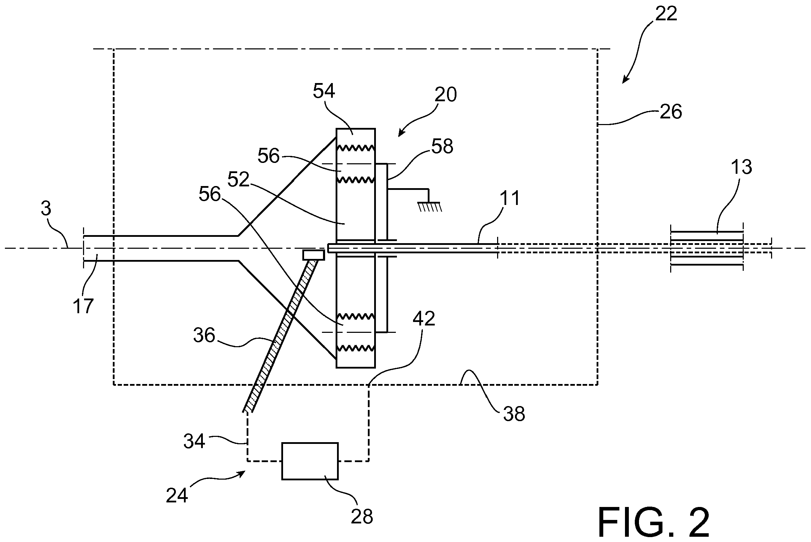

En référence à présent à la figure 2, il est représenté schématiquement une partie 22 du turboréacteur, comprenant le réducteur 20 et l'arbre basse pression 11, ainsi qu'un système de lubrification 24.

Plus précisément, le système de lubrification 24 comporte tout d'abord une enceinte d'huile 26 qui renferme le réducteur 20, et qui est traversée par l'arbre basse pression 11. Il comporte également un réservoir de lubrifiant 28, ainsi qu'une pompe d'alimentation (non représentée) qui peut être entraînée mécaniquement par la rotation de l'arbre haute pression 13, via un système de transmission connu. En alternative, la pompe d'alimentation peut être découplée de l'arbre 13 et entraînée en rotation par un moteur électrique de façon à ce que son débit de lubrifiant puisse être ajusté en pilotant la vitesse de rotation de la pompe par le pilotage du régime du moteur électrique. Le réservoir 28 communique avec un conduit d'arrivée de lubrifiant 34, dont une extrémité communique avec des moyens 36 de projection d'un lubrifiant. Ces moyens 36 prennent de préférence la forme d'un ou plusieurs gicleurs, ou de moyens analogues. Ils sont configurés pour projeter du lubrifiant sur tout ou partie de la pignonnerie du réducteur 20.

L'enceinte 26 présente un fond 38, et un conduit de récupération de lubrifiant 40 communique avec un point bas 42 du fond d'enceinte 38. Il permet de collecter par gravité le lubrifiant qui a été préalablement projeté par les moyens 36 sur le réducteur, et de réacheminer ce lubrifiant vers le réservoir 28.

Le réducteur 20 est centré sur l'axe géométrique 3 de l'arbre basse pression 11, qui est aussi l'axe géométrique du moyeu de soufflante 17. Egalement, cet axe 3 correspond à l'axe de rotation de la soufflante 17 et de l'arbre basse pression 11. Le réducteur 20 comporte un train épicycloïdal, qui dans la configuration représentée est classiquement équipé d'une roue dentée 52 formant un planétaire intérieur, centré sur l'axe 3. Le planétaire intérieur 52 est couplé en rotation autour d'une extrémité amont de l'arbre basse pression 11, d'une manière spécifique à l'invention qui sera détaillée ci-après.

Le réducteur comprend par ailleurs un planétaire extérieur également appelé couronne extérieure 54, correspondant à l'organe de sortie du réducteur solidaire en rotation du moyeu de soufflante 17. Il comporte enfin un porte-satellites fixe 58, supportant une rangée annulaire de satellites 56 agencés entre les planétaires 52, 54. D'autres configurations sont bien entendu possibles pour le réducteur, en particulier avec un porte-satellite tournant correspondant à l'organe de sortie du réducteur, un planétaire intérieur tournant, et une couronne extérieure fixe.

En conditions normales de fonctionnement du turboréacteur, l'arbre haute pression 13 tourne à une vitesse suffisamment élevée pour entraîner la pompe d'alimentation du système 24. Du lubrifiant circule alors avec un débit et une pression élevés dans le conduit d'arrivée de lubrifiant 34, avant d'être projeté par les moyens 36 sur la pignonnerie du réducteur 20. Ensuite, le lubrifiant s'écoule par gravité jusque dans le fond d'enceinte 38, pour être collecté par le conduit de récupération 40, puis réinjecté dans le système.

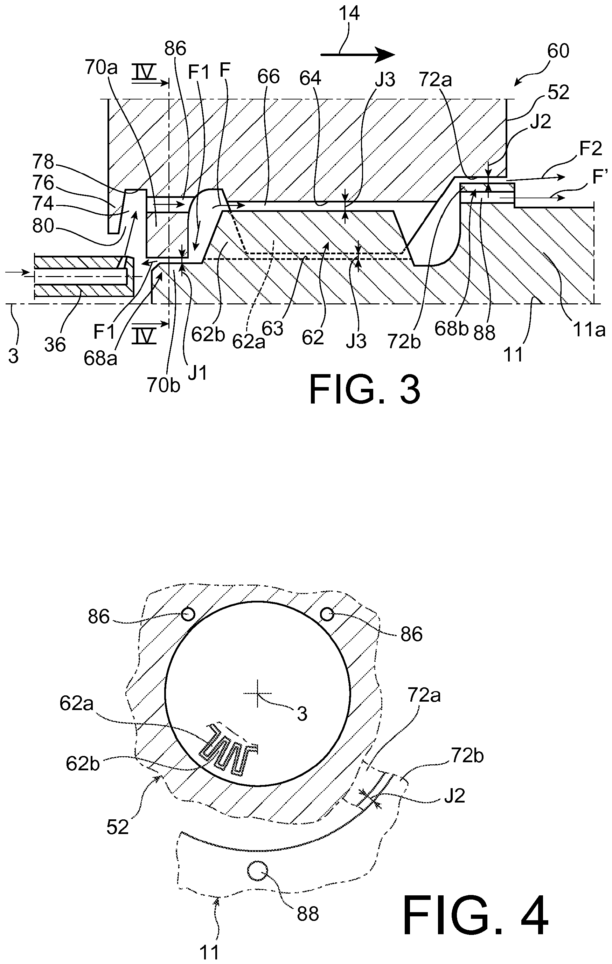

La figure 3 représente un agencement 60 selon un mode de réalisation préféré de l'invention, cet agencement étant intégré à la partie de turboréacteur 22 montrée sur la figure 2.

L'agencement 60 comporte un arbre moteur formé par l'arbre basse pression 11, un élément suiveur formé par le planétaire intérieur 52, et enfin, le gicleur 36.

Le planétaire 52, centré sur l'axe 3 et agencé autour d'une extrémité amont de l'arbre basse pression 11, est couplé en rotation avec ce dernier via une liaison à cannelures 62. Plus précisément, la liaison 62 comporte des premières cannelures 62a solidaires du planétaire 52 et se projetant radialement vers l'intérieur, ainsi que des secondes cannelures 62b solidaires de l'arbre 11 et se projetant radialement vers l'extérieur. Les premières et secondes cannelures 62a, 62b coopèrent ensemble selon une direction circonférentielle. En revanche, en bout de chacune des premières et secondes cannelures 62a, 62b, il est prévu un jeu radial J3 assez important, défini respectivement avec une surface extérieure 63 de l'arbre 11, et une surface intérieure 64 du planétaire 52. Comme cela est visible sur la figure 3, c'est à partir de ces surfaces 64 et 63 que les cannelures 62a, 62b sont en saillie, respectivement vers l'intérieur et vers l'extérieur.

La surface extérieure 63 de l'arbre 11 et la surface intérieure 64 du planétaire 52 délimitent ainsi radialement une cavité annulaire 66 de lubrification des cannelures 62a, 62b, centrée sur l'axe 3. Axialement, cette cavité annulaire 66 est en tout ou partie délimitée par deux liaisons de centrage radial de l'arbre 11 et du planétaire 52, ces deux liaisons étant agencées de part et d'autre des cannelures 62a, 62b.

Il s'agit d'abord d'une liaison amont 68a de centrage radial du planétaire 52 relativement à l'arbre 11, et ensuite d'une liaison aval 68b, toujours de centrage radial du planétaire 52 relativement à l'arbre 11. Ces deux liaisons 68a, 68b sont réalisées glissantes axialement, en particulier pour absorber les dilatations thermiques différentielles entre le planétaire 52 et l'arbre 11, selon la direction axiale. De préférence, ces liaisons 68a, 68b présentent aussi un faible jeu radial, également pour absorber les dilatations thermiques différentielles radiales entre le planétaire 52 et l'arbre 11. Ce faible jeu radial permet aussi la lubrification des liaisons 68a, 68b, comme cela sera décrit ci-après.

De manière plus précise, la liaison amont de centrage 68a est réalisée par une première portion de centrage amont 70a, en forme de paroi ou collerette annulaire faisant saillie radialement vers l'intérieur à partir de la surface intérieure 64 du planétaire 52. Elle est également réalisée à l'aide d'une seconde portion de centrage amont 70b, correspondant à une partie de la surface extérieure 63 de l'arbre 11. Entre ces deux portions amont 70a, 70b, il est définit le jeu radial amont J1, correspondant au jeu radial de la liaison amont 68a.

De manière analogue, la liaison aval de centrage 68b est réalisée par une première portion de centrage aval 72a, correspondant à une partie de la surface intérieure 64 du planétaire 52. Elle est également réalisée par une seconde portion de centrage aval 72b, en forme de paroi ou collerette annulaire faisant saillie radialement vers l'extérieur à partir de la surface extérieure 63 de l'arbre 11. Il est noté que la paroi annulaire 72b s'étend à partir d'une portion 11a de l'arbre 11, qui présente un diamètre supérieur à celui de l'extrémité amont de l'arbre portant les secondes cannelures 62b. Ainsi, la paroi annulaire 72b s'étend radialement vers l'extérieur au-delà des secondes cannelures 62b, et c'est au niveau de cette même paroi 72b qu'est marquée la rupture de diamètre entre la portion 11a de l'arbre 11, et son extrémité amont intégrant les secondes cannelures 62b.

Entre les deux portions amont 72a, 72b formant la liaison aval 68b, il est également définit le jeu radial aval J2, correspondant au jeu radial de cette liaison aval 68b.

Dans le but notamment de s'assurer que les cannelures 62a, 62b ne participent pas au centrage radial du planétaire 52 relativement à l'arbre 11, il est fait en sorte que les jeux radiaux amont et aval J1, J2 soient strictement inférieurs aux jeux radiaux J3 en bout de cannelures. Cette particularité permet également de ménager un flux principal de lubrification à travers les cannelures 62a, 62b, comme cela sera décrit ci-après.

A l'extrémité amont du planétaire 52, celui-ci délimite une cavité annulaire 74 de collecte du lubrifiant projeté par le gicleur 36. Cette cavité annulaire 74 est délimitée axialement vers l'amont par un rebord annulaire 76 se projetant radialement vers l'intérieur à partir de la surface intérieure 64 du planétaire 52, et délimitée vers l'aval par la première portion de centrage amont 70a. La cavité 74 est fermée radialement vers l'intérieur par un fond 78 assimilable à une portion de la surface intérieure 64 du planétaire 52, tandis qu'elle reste ouverte radialement. En effet, une ouverture annulaire radiale 80 fait face radialement à une extrémité de projection du gicleur 36, pour que le lubrifiant projeté par le gicleur 36 pénètre facilement dans la cavité annulaire de collecte 74 centrée sur l'axe 3. Par ailleurs, la première portion de centrage amont 70a est traversée par un ou plusieurs passages d'admission de lubrifiant 86, par exemple d'orientation axiale. Chaque passage 86 débouche donc d'une part en amont dans la cavité de collecte de lubrifiant 74, de préférence à proximité du fond 78, et d'autre part en aval dans la cavité 66 de lubrification des cannelures 62a, 62b.

En outre, la seconde portion de centrage aval 72b est traversée par un ou plusieurs passages d'évacuation de lubrifiant 88, par exemple d'orientation axiale. Chaque passage 88 débouche donc d'une part en amont dans la cavité 66 de lubrification des cannelures 62a, 62b, et d'autre part en aval, extérieurement à l'agencement 60, de préférence dans l'enceinte d'huile 26 précitée.

Comme cela est schématisé que la figure 4, chaque passage d'évacuation de lubrifiant 88 adopte une position angulaire, en rapport à l'axe 3, qui est différente de la position angulaire de chaque passage d'admission de lubrifiant 86. Un décalage angulaire de 120° peut être adopté entre ces passages 86, 88, comme cela a été représenté sur la figure 4. D'autres valeurs d'angles sont bien évidemment possibles, comme par exemple 90°. Ce décalage angulaire assure un maintien du lubrifiant lorsque le turboréacteur est à l'arrêt, quelle que soit la position angulaire de l'ensemble rotatif 11, 52. Cette particularité permet d'éviter le risque de démarrage à sec du turboréacteur, en assurant un minimum de lubrifiant dans les cannelures 62a, 62b.

De retour à la figure 3, il va être décrit le fonctionnement de l'agencement 60, et le procédé visant à sa lubrification.

Le lubrifiant, de préférence de l'huile, est tout d'abord projeté depuis le gicleur 36 dans la cavité de collecte 74. La rotation de l'ensemble rotatif 11, 52 provoque un effort centrifuge forçant le lubrifiant vers le fond 78 de la cavité de collecte 74. La totalité du lubrifiant collecté dans la cavité 74 transite alors vers l'aval, à travers les passages d'admission de lubrifiant 86 pour pénétrer dans la cavité 66 de lubrification des cannelures 62a, 62b.

Après avoir pénétré dans la cavité 66, le lubrifiant se sépare en un flux principal F de lubrification des premières et secondes cannelures 62a, 62b, et en un premier flux de lubrification de liaison F1, traversant la liaison amont 68a de l'intérieur vers l'extérieur de la cavité 66. Le dimensionnement des éléments de l'agencement 60 est réalisé de telle sorte que le premier flux F1 à travers la liaison amont 68a reste assez faible en comparaison du flux principal F visant à lubrifier les premières et secondes cannelures 62a, 62b. Par exemple, le premier flux F1 à travers la liaison amont 68a représente environ 1/5 du débit total introduit dans la cavité 66, tandis que le flux principal F représente environ 4/5 de ce débit total.

Après son passage à travers les cannelures 62a, 62b, le flux principal de lubrification F se sépare en un flux de fuite F' à travers le passage d'évacuation de lubrifiant 88, et en un second flux de lubrification de liaison F2, traversant la liaison aval 68b de l'intérieur vers l'extérieur de la cavité 66. Le lubrifiant du flux de fuite F' est ainsi extrait axialement de l'agencement 60 par le passage d'évacuation 88, puis il retombe ensuite préférentiellement par gravité dans le fond de l'enceinte d'huile 26 précitée.

Ici également, le dimensionnement des éléments de l'agencement 60 est réalisé de telle sorte que le second flux F2 à travers la liaison aval 68b reste assez faible en comparaison du flux de fuite F' à travers le passage d'évacuation de lubrifiant 88. Par exemple, le second flux F2 à travers la liaison amont 68b représente également environ 1/5 du débit total introduit dans la cavité 66, tandis que le flux de fuite F' représente quant à lui environ 3/5 du débit total.

De manière générale, le dimensionnement des éléments de l'agencement 60 est également réalisé de telle sorte que des débits non-nuls soient observés pour chacun des flux de lubrification F1, F2 et F', quelles que soient les conditions de fonctionnement du turboréacteur.

Bien entendu, diverses modifications peuvent être apportées par l'homme du métier à l'invention qui vient d'être décrite, uniquement à titre d'exemples non limitatifs et dont la portée est délimitée par les revendications annexées.

## Revendications

1. Agencement (60) pour turbomachine d'aéronef comprenant un arbre (11) rotatif selon un axe de rotation (3), ainsi qu'un élément suiveur (52) centré sur l'axe de rotation et couplé en rotation avec l'arbre (11) par une liaison à cannelures (62) comprenant des premières cannelures (62a) solidaires de l'élément suiveur (52), ainsi que des secondes cannelures (62b) solidaires de l'arbre rotatif (11) et coopérant avec lesdites premières cannelures , ainsi que des moyens (36) de projection d'un lubrifiant dans une cavité de collecte de lubrifiant (74),
**caractérisé en ce que** l'agencement comporte de plus :
- de part et d'autre de la liaison à cannelures (62), respectivement une liaison amont (68a) de centrage radial de l'élément suiveur (52) relativement à l'arbre (11), et une liaison aval (68b) de centrage radial de l'élément suiveur (52) relativement à l'arbre (11), les liaisons amont et aval de centrage radial (68a, 68b) étant glissantes axialement ;
- au moins un passage d'admission de lubrifiant (86) réalisé à travers l'arbre rotatif (11) ou l'élément suiveur (52), le passage d'admission de lubrifiant (86) débouchant d'une part dans ladite cavité de collecte de lubrifiant (74), et d'autre part dans une cavité (66) de lubrification des cannelures délimitée en partie par les liaisons amont et aval de centrage radial (68a, 68b) ; et
- au moins un passage d'évacuation de lubrifiant (88) réalisé à travers l'arbre rotatif (11) ou l'élément suiveur (52), le passage d'évacuation de lubrifiant (88) débouchant d'une part dans ladite cavité de lubrification des cannelures (66), et d'autre part extérieurement à l'agencement.

2. Agencement selon la revendication 1, **caractérisé en ce que** :
- la liaison amont de centrage radial (68a) est réalisée par une première portion de centrage amont (70a) prévue sur l'élément suiveur (52), ainsi que par une seconde portion de centrage amont (70b) prévue sur l'arbre (11) et coopérant avec la première portion de centrage amont (70a) de manière à définir un jeu radial amont (J1) au sein de la liaison amont de centrage radial (68a) ;
- la liaison aval de centrage radial (68b) est réalisée par une première portion de centrage aval (72a) prévue sur l'élément suiveur (52), ainsi que par une seconde portion de centrage aval (72b) prévue sur l'arbre (11) et coopérant avec la première portion de centrage aval (72a) de manière à définir un jeu radial aval (J2) au sein de la liaison aval de centrage radial (68b) ; et
- chacun des jeux radiaux amont et aval (J1, J2) est strictement inférieur aux jeux radiaux (J3) en bout de chacune des premières et secondes cannelures (32a, 62b).

3. Agencement selon la revendication 2, **caractérisé en ce que** le/les passages d'admission de lubrifiant (86) sont réalisés à travers la première portion de centrage amont (70a) prévue sur l'élément suiveur (52), et/ou **en ce que** le/les passages d'évacuation de lubrifiant (88) sont réalisés à travers la seconde portion de centrage aval (72b) prévue sur l'arbre rotatif (11).

4. Agencement selon l'une quelconque des revendications précédentes, **caractérisé en ce que** la cavité de collecte de lubrifiant (74) est annulaire et centrée sur l'axe de rotation (3), ladite cavité de collecte (74) étant ouverte radialement vers l'intérieur, et fermée radialement vers l'extérieur.

5. Agencement selon l'une quelconque des revendications précédentes, **caractérisé en ce que** la cavité de collecte de lubrifiant (74) est réalisée au sein de l'élément suiveur (52).

6. Agencement selon l'une quelconque des revendications précédentes, **caractérisé en ce que** l'élément suiveur (52) est agencé autour de l'arbre rotatif (11).

7. Agencement selon l'une quelconque des revendications précédentes, **caractérisé en ce que** l'élément suiveur (52) est une roue dentée.

8. Turbomachine (1) d'aéronef comprenant un agencement (60) selon l'une quelconque des revendications précédentes.

9. Turbomachine selon la revendication précédente, **caractérisée en ce qu'**elle comporte une soufflante (15) entraînée par un réducteur (20) équipé d'au moins une roue dentée (52) formant l'élément suiveur de l'agencement (60).

10. Procédé de lubrification d'un agencement (60) selon l'une quelconque des revendications 1 à 7, **caractérisé en ce qu'**il est mis en oeuvre en projetant du lubrifiant dans la cavité de collecte de lubrifiant (74), de sorte que :
- le lubrifiant traverse ledit au moins un passage d'admission de lubrifiant (86) pour pénétrer dans la cavité de lubrification des cannelures (66), à partir de laquelle le lubrifiant se sépare en un flux principal (F) de lubrification des premières et secondes cannelures (62a, 62b), et en un premier flux de lubrification de liaison (F1), traversant la liaison amont (68a) de l'intérieur vers l'extérieur de la cavité de lubrification des cannelures (66) ;
- puis de sorte qu'après son passage à travers les cannelures (62a, 62b), le flux principal (F) de lubrification des premières et secondes cannelures se sépare en un flux de fuite (F') à travers ledit au moins un passage d'évacuation de lubrifiant (88), et en un second flux de lubrification de liaison (F2), traversant la liaison aval (68b) de l'intérieur vers l'extérieur de la cavité de lubrification des cannelures (66).

## Patentansprüche

1. Anordnung (60) für eine Flugzeugturbomaschine, umfassend eine Welle (11), die sich um eine Drehachse (3) dreht, sowie ein Folgeelement (52), das auf der Drehachse zentriert ist und über eine Keilnutenverbindung (62), die erste Keilnuten (62a), die fest mit dem Folgeelement (52) verbunden sind, sowie zweite Keilnuten (62b) umfasst, die fest mit der Drehachse (11) verbunden sind und mit den ersten Keilnuten zusammenwirken, drehbar mit der Welle (11) gekoppelt ist, sowie ein Mittel (36) zum Einspritzen eines Schmiermittels in einen Schmiermittel-Sammelhohlraum (74),
**dadurch gekennzeichnet, dass** die Anordnung außerdem Folgendes enthält:
- auf beiden Seiten der Keilnutenverbindung (62) jeweils eine vorgelagerte Verbindung (68a) zum radialen Zentrieren des Folgeelements (52) im Verhältnis zur Welle (11) und eine nachgelagerte Verbindung (68b) zum radialen Zentrieren des Folgeelements (52) im Verhältnis zur Welle (11), wobei die vorgelagerte und die nachgelagerte radiale Zentrierverbindung (68a, 68b) axial gleitend sind;
- mindestens einen Schmiermittel-Einlasskanal (86), der durch die Drehwelle (11) oder das Folgeelement (52) verlaufend ausgebildet ist, wobei der Schmiermittel-Einlasskanal (86) einerseits in den Schmiermittel-Sammelhohlraum (74) und andererseits in einen Schmiermittelhohlraum (66) der Keilnuten mündet, der teilweise durch die vorgelagerte und die nachgelagerte radiale Zentrierverbindung (68a, 68b) begrenzt wird; und
- mindestens einen Schmiermittel-Auslasskanal (88), der durch die Drehwelle (11) oder das Folgeelement (52) verlaufend ausgebildet ist, wobei der Schmiermittel-Auslasskanal (88) einerseits in den Schmiermittelhohlraum (66) der Keilnuten und andererseits außerhalb der Anordnung mündet.

2. Anordnung nach Anspruch 1, **dadurch gekennzeichnet, dass**:
- die vorgelagerte radiale Zentrierverbindung (68a) durch einen ersten vorgelagerten Zentrierabschnitt (70a), der am Folgeelement (52) vorgesehen ist, sowie durch einen zweiten vorgelagerten Zentrierabschnitt (70b) ausgebildet wird, der an der Welle (11) vorgesehen ist und mit dem ersten vorgelagerten Zentrierabschnitt (70a) zusammenwirkt, um einen vorgelagerten radialen Spielraum (J1) innerhalb der vorgelagerten radialen Zentrierverbindung (68a) zu definieren;
- die nachgelagerte radiale Zentrierverbindung (68b) durch einen ersten nachgelagerten Zentrierabschnitt (72a), der am Folgeelement (52) vorgesehen ist, sowie durch einen zweiten nachgelagerten Zentrierabschnitt (72b) ausgebildet wird, der an der Welle (11) vorgesehen ist und mit dem ersten nachgelagerten Zentrierabschnitt (72a) zusammenwirkt, um einen nachgelagerten radialen Spielraum (J2) innerhalb der nachgelagerten radialen Zentrierverbindung (68b) zu definieren; und
- jeder des vorgelagerten und des nachgelagerten radialen Spielraums (J1, J2) jeweils strikt kleiner ist als die radialen Spielräume (J3) am Ende jeder der ersten und der zweiten Keilnuten (32a, 62b).

3. Anordnung nach Anspruch 2, **dadurch gekennzeichnet, dass** der bzw. die Schmiermittel-Einlasskanäle (86) durch den ersten vorgelagerten Zentrierabschnitt (70a) verlaufend ausgebildet sind, der am Folgeelement (52) vorgesehen ist, und/oder der bzw. die Schmierstoff-Auslasskanäle (88) durch den zweiten nachgelagerten Zentrierabschnitt (72b) verlaufend ausgebildet sind, der an der Drehwelle (11) vorgesehen ist.

4. Anordnung nach einem der vorhergehenden Ansprüche, **dadurch gekennzeichnet, dass** der Schmiermittel-Sammelhohlraum (74) ringförmig und auf der Drehachse (3) zentriert ist, wobei der Sammelhohlraum (74) radial nach innen offen und radial nach außen geschlossen ist.

5. Anordnung nach einem der vorhergehenden Ansprüche, **dadurch gekennzeichnet, dass** der Schmiermittel-Sammelhohlraum (74) innerhalb des Folgeelements (52) ausgebildet ist.

6. Anordnung nach einem der vorhergehenden Ansprüche, **dadurch gekennzeichnet, dass** das Folgeelement (52) um die Drehwelle (11) herum angeordnet ist.

7. Anordnung nach einem der vorhergehenden Ansprüche, **dadurch gekennzeichnet, dass** das Folgeelement (52) ein Zahnrad ist.

8. Flugzeugturbomaschine (1), die eine Anordnung (60) nach einem der vorhergehenden Ansprüche umfasst.

9. Turbomaschine nach dem vorhergehenden Anspruch, **dadurch gekennzeichnet, dass** sie einen Bläser (15) umfasst, der von einem Getriebemotor (20) angetrieben wird, der mit mindestens einem Zahnrad (52) ausgestattet ist, das das Folgeelement der Anordnung (60) bildet.

10. Verfahren zum Schmieren einer Anordnung (60) nach einem der Ansprüche 1 bis 7, **dadurch gekennzeichnet, dass** es durch Einsprühen von Schmiermittel in den Schmiermittel-Sammelhohlraum (74) durchgeführt wird, so dass:
- das Schmiermittel durch den mindestens einen Schmiermittel-Einlasskanal (86) strömt, um in den Schmiermittelhohlraum (66) der Keilnuten einzudringen, von wo aus sich das Schmiermittel in einen Hauptschmierstrom (F) der ersten und der zweiten Keilnuten (62a, 62b) und einen ersten Verbindungsschmierstrom (F1) trennt, der durch die vorgelagerte Verbindung (68a) von innen nach außerhalb des Schmiermittelhohlraums (66) der Keilnuten strömt;
- sich dann der Hauptschmierstrom (F) der ersten und der zweiten Keilnuten nach dem Durchströmen der Keilnuten (62a, 62b) in einen Leckstrom (F') durch den mindestens einen Schmiermittel-Auslasskanal (88) und einen zweiten Verbindungsschmierstrom (F2) trennt, der durch die nachgelagerte Verbindung (68b) von innen nach außerhalb des Schmiermittelhohlraums (66) der Keilnuten strömt.

## Claims

1. An arrangement (60) for an aircraft turbine engine comprising a shaft (11) rotating about an axis of rotation (3), as well as a following member (52) centred on the axis of rotation and rotatably coupled to the shaft (11) by a splined connection (62) comprising first splines (62a) integral with the following member (52), as well as second splines (62b) integral with the rotating shaft (11) and co-operating with said first splines, and means (36) for spraying a lubricant into a lubricant collection cavity (74),
**characterised in that** the arrangement additionally includes:
- on either side of the splined connection (62), respectively an upstream connection (68a) for radially centring the following member (52) relative to the shaft (11), and a downstream connection (68b) for radially centring the following member (52) relative to the shaft (11), the upstream and downstream radial centring connections (68a, 68b) being axially sliding;
- at least one lubricant intake passage (86) made through the rotating shaft (11) or the following member (52), the lubricant intake passage (86) opening on the one hand into said lubricant collection cavity (74), and on the other hand into a spline lubrication cavity (66) delimited in part by the upstream and downstream radial centring connections (68a, 68b); and
- at least one lubricant discharge passage (88) made through the rotating shaft (11) or the following member (52), the lubricant discharge passage (88) opening on the one hand into said spline lubrication cavity (66), and on the other hand externally to the arrangement.

2. The arrangement according to claim 1, **characterised in that**:
- the upstream radial centring connection (68a) is made by a first upstream centring portion (70a) provided on the following member (52), as well as by a second upstream centring portion (70b) provided on the shaft (11) and cooperating with the first upstream centring portion (70a) so as to define an upstream radial clearance (J1) within the upstream radial centring connection (68a);
- the downstream radial centring connection (68b) is formed by a first downstream centring portion (72a) provided on the following member (52), as well as a second downstream centring portion (72b) provided on the shaft (11) and cooperating with the first downstream centring portion (72a) so as to define a downstream radial clearance (J2) within the downstream radial centring connection (68b); and
- each of the upstream and downstream radial clearances (J1, J2) is strictly less than the radial clearances (J3) at the end of each of the first and second splines (32a, 62b).

3. The arrangement according to claim 2, **characterised in that** the lubricant intake passage(s) (86) is/are made through the first upstream centring portion (70a) provided on the following member (52), and/or the lubricant outlet passage(s) (88) is/are made through the second downstream centring portion (72b) provided on the rotating shaft (11).

4. The arrangement according to any of the preceding claims, **characterised in that** the lubricant collection cavity (74) is annular and centred on the axis of rotation (3), said collection cavity (74) being radially inwardly open, and radially outwardly closed.

5. The arrangement according to any of the preceding claims, **characterised in that** the lubricant collection cavity (74) is made within the following member (52).

6. The arrangement according to any of the preceding claims, **characterised in that** the following member (52) is arranged around the rotating shaft (11).

7. The arrangement according to any of the preceding claims, **characterised in that** the following member (52) is a gear wheel.

8. An aircraft turbine engine (1) comprising an arrangement (60) according to any of the preceding claims.

9. The turbine engine according to the preceding claim, **characterised in that** it includes a fan (15) driven by a reduction gear (20) equipped with at least one gear wheel (52) forming the following member of the arrangement (60).

10. A method for lubricating an arrangement (60) according to any of claims 1 to 7, **characterised in that** it is implemented by spraying lubricant into the lubricant collection cavity (74), such that:
- the lubricant passes through said at least one lubricant intake passage (86) to penetrate the spline lubrication cavity (66), from which the lubricant separates into a main lubrication stream (F) of the first and second splines (62a, 62b), and a first connection lubrication stream (F1), passing through the upstream connection (68a) from inside to outside the spline lubrication cavity (66);
- then so that after passing through the splines (62a, 62b), the main lubrication stream (F) of the first and second splines separates into a leakage stream (F') through said at least one lubricant discharge passage (88), and a second connection lubrication stream (F2), passing through the downstream connection (68b) from inside to outside the spline lubrication cavity (66).
